# EUROPÄISCHE PATENTANMELDUNG

(11) **EP 2 264 432 A1**
(43) Veröffentlichungstag der Anmeldung: **22.12.2010**
(21) Anmeldenummer: 10005790.0
(22) Anmeldetag: 04.06.2010
(51) Int. Cl.: G01N 21/09, C07C 263/10, G01N 21/03

(54) **Druckfeste Sonde**

(30) Priorität: 17.06.2009 DE 102009025677
(71) Anmelder: Bayer MaterialScience AG, 51368 Leverkusen (DE)
(72) Erfinder: Rose, Andreas, 40764 Langenfeld (DE); Gotter, Martin, Dr., 50933 Köln (DE); Schwindack, Thomas, 77573 League City (US); Schwinning, Christoph, 51379 Leverkusen (DE); Eckert, Patrick, 79400 Kandern (DE); Kändler, Holm, 79424 Auggen (DE); Koltunski, Christof-Krzysztof, 79249 Merzhausen (DE)

(57) **Zusammenfassung**

Die Erfindung betrifft eine Sonde zur Überwachung eines unter Druck stehenden Prozesses, sowie ein Verfahren zur Überwachung eines Prozesses, in dem ein oder mehrere Gefahrstoffe auftreten.

## Beschreibung

Die Erfindung betrifft eine Sonde zur Überwachung eines unter Druck stehenden Prozesses, sowie ein Verfahren zur Überwachung eines Prozesses, in dem ein oder mehrere Gefahrstoffe auftreten.

Chemische Produktionsprozesse können effizient gesteuert werden, wenn die aktuelle Zusammensetzung und Qualität von Ausgangsstoffen, Reaktionsgemischen oder Produkten in verschiedenen Stufen des Produktionsprozesses bekannt sind. Online-spektroskopische Messverfahren erlauben die direkte kontinuierliche Überwachung eines laufenden Prozesses. Optische Sonden sind hier von besonderer Bedeutung, da die Analyse mittels optischer Sonden nicht-invasiv im direkten Probenkontakt erfolgt und ohne aufwändige Probenahme oder Präparation des zu analysierenden Stoffgemisches auskommt.

Für die Anwendbarkeit optischer Sonden ist der Zugang zu dem zu untersuchendem Stoff oder Stoffgemisch entscheidend. Chemische Prozesse werden üblicherweise in geschlossenen Reaktorbehältem und/oder Rohrleitungen durchgeführt. Diese sind in der Regel für den Wellenlängenbereich, der für die Analyse verwendet wird, undurchlässig.

Daher müssen Fenster vorgesehen werden, die für den verwendeten Wellenlängenbereich transparent sind, um eine Verfolgung der Vorgänge im Reaktorraum oder den angeschlossenen Rohrleitungen zu ermöglichen.

Wegen möglicher toxischer Eigenschaften der im Prozess zu analysierenden Stoffe werden an diese Fenster hohe Anforderungen hinsichtlich der Dichtigkeit gestellt, insbesondere bei Prozessen, die unter hohem Druck betrieben werden.

Zur Ein- und Auskoppelung elektromagnetischer Strahlung in einen Reaktor werden häufig so genannte Koppelleitungen eingesetzt. Diese sind flexible Leitungen, die eine Übertragung von elektromagnetischer Strahlung über eine gewisse Strecke ermöglichen, ohne dass eine genaue Positionierung der optischen Komponenten entlang dieser Strecke erforderlich ist. Bekannt sind vor allem Glasfaserkabel aus dem Telekommunikationsbereich. In der Prozessüberwachung oder Online-Analytik werden so genannte Hohlleiterkopplungen oder spezielle Silberhalogenid- bzw. Fluoridglas- Lichtleiter bei Anwendungen im mittleren Infrarot-Bereich (400 - 4000 cm⁻¹) verwendet. Im nahen Infrarot-Bereich (NIR: 4000 - 14000 cm⁻¹) und ultravioletten/sichtbaren Bereich (UV/Vis: 200 - 700 nm) werden bevorzugt Quarz-Lichtleiter verwendet, die in diesen Spektralbereichen mit geringer Dämpfung verfügbar sind.

Die Veröffentlichung DE10230857A1 beschreibt ein Prozessfenster für die Online-Analytik mit Drucküberwachung. An zwei gegenüberliegenden Stellen eines Rohres werden zwei Fenster in das Rohr eingebracht, durch die elektromagnetische Strahlung in das Rohr ein- und wieder ausgekoppelt werden kann. Jedes Fenster ist in einen Gewindeeinsatz eingesteckt. Jeweils 2 Dichtungen zwischen dem Gewindeeinsatz und dem Rohr sowie zwischen dem Fenster und dem Gewindeeinsatz sorgen für eine Abdichtung des Rohrinnenraums gegenüber der Außenwelt. Der Gewindeeinsatz ist in eine Halterung (Messzellenkörper) eingeschraubt, die mit dem Rohr verbunden ist. Sowohl zwischen dem Gewindeeinsatz und dem Fenster als auch zwischen dem Gewindeeinsatz und der Halterung befinden sich Hohlräume zwischen der ersten und zweiten Dichtung, die über Bohrungen miteinander verbunden sind. Über eine Dichtung zwischen Gewindeeinsatz und Halterung sind die Hohlräume von der Außenwelt abgedichtet. Es liegt eine doppelte Abdichtung des Rohrinnenraumes von der Außenwelt über das Prozessfenster vor. Neben dieser doppelten Absicherung erlaubt die Vorrichtung die Überwachung von Leckagen. Verliert eine der Dichtungen, die in Kontakt mit dem Rohrinnenraum steht, ihre Wirkung, treten Stoffe aus dem unter Druck stehenden Rohr in die Hohlräume ein. Über einen Drucksensor, der mit den Hohlräumen verbunden ist, kann der ansteigende Druck registriert werden.

Die Dimensionen und Geometrien optischer Sonden und der darin enthaltenen optischen Komponenten erlauben nicht die doppelte Abdichtung an jeweils einem Fenster in der Form des in DE10230857A1 offenbarten Prozessfensters. Es ist zudem allgemein bekannt, dass Lichtleiter und Hohlleiter mechanisch weit weniger stark beanspruchbar sind als beispielsweise ein Quarzglas- oder Saphir-Fenster, wie sie in einem Prozessfenster gemäß DE10230857A1 verwendet werden.

Dementsprechend ist auch die druckdichte Abdichtung eines Lichtleiters oder Hohlleiters anspruchsvoller und/oder aufwändiger.

Bei den heutzutage kommerziell erhältlichen Sonden wird daher nicht der Licht- oder Hohlleiter selbst gegenüber dem Prozessraum abgedichtet, sondern das Licht wird von einer Quelle über eine erste Koppelleitung durch ein Fenster in den Prozessraum eingekoppelt und durch ein weiteres oder dasselbe Fenster wieder ausgekoppelt, um über eine zweite Koppelleitung zu einem Detektor zu gelangen, wobei die Abdichtung des Prozessraumes gegenüber der Außenwelt (in der sich die Koppelleitungen befinden) über eine Dichtung zwischen Fenster und Prozessraum erfolgt.

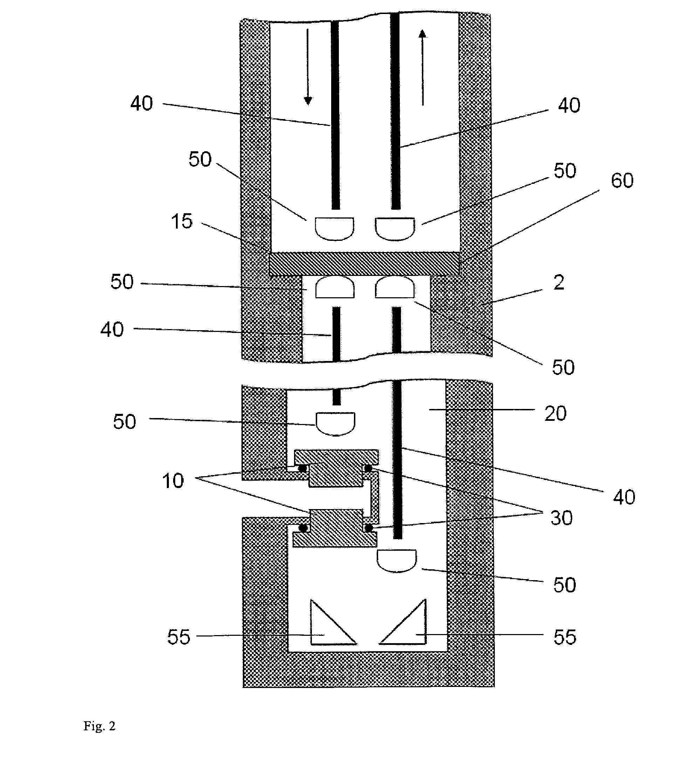

Dies ist beispielsweise in der Patentschrift DE4414975C2 offenbart. In Figur 2 der genannten Patentschrift ist ein druckfestes Fenster gegenüber einem Mantel durch eine Dichtung abgedichtet. In dem Mantel sind Lichtleiter angeordnet, die Licht durch das Fenster in den Reaktionsraum ein- und auskoppeln. Als Besonderheit sind in der Vorrichtung in Figur 2 die Lichtleiter zusätzlich noch mit einem Kleber mit dem Mantel verbunden. Diese Verklebungen sollen eine druckfeste Barriere bilden. Eine solche zusätzliche Druckbarriere ist jedoch nicht allgemein anwendbar, denn viele Stoffe wie z.B. Lösungsmittel oder starke Oxidationsmittel lösen den Klebstoff oder reagieren mit dem Klebstoff, so dass diese Barriere zerstört wird. Eine Verklebung ist zudem keine definierte Verbindung, die eine prozesstaugliche Abdichtung hinsichtlich Druckfestigkeit, Temperaturbeständigkeit und chemischer Beständigkeit gewährleistet.

Andere im Stand der Technik beschriebene Sonden verfügen über eine einfache Dichtung, mit der der Prozessraum über ein Fenster gegenüber der Sondenoptik abgedichtet ist (siehe z.B. US-A-5185834, US-A-5170056, US-A-4835389, US-A4988195, US-A5051551, DE-A4038354). Bei Prozessen, die unter Druck ablaufen, besteht die Gefahr eines Bruchs des Fensters oder einer Leckage an einer Dichtung, so dass Stoffe aus dem Prozess in die Außenwelt gelangen können. Neben der Gefahr der Beschädigung der Sonden-Optik besteht bei toxischen Stoffen insbesondere die Gefahr der Schädigung von Mensch und Umwelt.

Ausgehend vom beschriebenen Stand der Technik stellt sich damit die Aufgabe, eine Sonde bereitzustellen, die eine Online-Überwachung eines unter Druck stehenden Prozesses ermöglicht und die über Sicherheitsvorkehrungen verfügt, die wirksam verhindern, dass bei Ausfall einer mit dem Prozessraum in Kontakt stehenden Dichtung Stoffe aus dem Prozessraum in die Umgebung austreten.

Erfindungsgemäß wird diese Aufgabe durch eine Sonde gelöst, mindestens umfassend
■ einen Mantel, mit einem ersten Fenster, das mit dem Prozessraum in Kontakt gebracht werden kann, und einem zweiten Fenster, das zusammen mit dem ersten Fenster und dem Mantel einen Hohlraum einschließt,
■ Dichtmittel, die den Hohlraum zum Prozess und zur Außenwelt abdichten,
■ mindestens eine Koppelleitung, die zwischen dem ersten und dem zweiten Fenster so angeordnet ist, dass elektromagnetische Strahlung, die durch eines der beiden Fenster eintritt, über die Koppelleitung durch das jeweils andere Fenster geleitet werden kann.

Der Mantel dient der Fassung eines ersten und eines zweiten Fensters. Unter einem Mantel wird ein Körper verstanden, in den Fester druckdicht eingebracht werden können. Der Mantel kann ein- oder mehrstückig ausgeführt sein. Ist er mehrstückig ausgeführt, so können die verschiedenen Bestandteile des Mantels druckdicht zu einem zusammenhängenden Körper verbunden werden.

Bevorzugt ist der Mantel als Hohlzylinder ausgeführt.

Das erste Fenster steht bei der Verwendung der erfindungsgemäßen Sonde zur Prozessüberwachung in Kontakt mit dem Prozessraum. Unter Fenster wird hier eine Komponente der Sonde verstanden, die zumindest teilweise für elektromagnetische Strahlung durchlässig ist. Bevorzugt ist das Fenster zumindest teilweise für elektromagnetische Strahlung in dem Wellenlängenbereich 200 bis 700 nm (UV/Vis) und/oder in dem Wellenzahlenbereich 400 bis 4000 cm⁻¹ (IR) und/oder 4000 bis 14000 cm⁻¹ (NIR) durchlässig. Unter einer teilweisen Durchlässigkeit wird eine Durchlässigkeit von mindestens 50% verstanden, d.h. von der eingestrahlten Strahlung dringen mindestens 50% durch das Fenster hindurch.

Der Mantel verfügt über Mittel, die eine druckfeste Verbindung zwischen dem Mantel und dem Behälter (Rohr, Reaktor), der den Prozessraum umgibt, ermöglicht. Ferner sind Dichtmittel vorhanden, die eine Abdichtung des prozessseitigen Fensters im Mantel bewirken. Unter Dichtmittel werden die dem Fachmann bekannten Mittel zur druckfesten Abdichtung von Fenstern verstanden, wie z.B. O-Ring-Dichtungen.

Der Mantel verfügt über mindestens ein weiteres Fenster, das hier als zweites Fenster bezeichnet wird. Der Mantel, das erste und das zweite Fenster schließen einen Hohlraum ein. Dichtmittel am zweiten Fenster bewirken eine Abdichtung des Hohlraumes gegenüber der Außenwelt. Mindestens eine Koppelleitung ist in dem Hohlraum zwischen dem ersten und dem zweiten Fenster so angeordnet, das elektromagnetische Strahlung durch ein Fenster über die Koppelleitung durch das andere Fenster geleitet werden kann.

Unter Koppelleitung wird ein bevorzugt flexibler Körper verstanden, der elektromagnetische Strahlung über eine Strecke übertragen kann. Die Koppelleitung weist bevorzugt eine geringe Dämpfung auf. Bevorzugte Koppelleitungen sind Lichtleiter für die Übertragung von elektromagnetischer Strahlung im NIR- oder UV/Vis-Bereich oder Hohleiter bzw. Lichtleiter für die Übertragung von elektromagnetischer Strahlung im IR- Bereich.

Die Koppelleitung schafft zwischen den Fenstern eine Verbindung für elektromagnetische Strahlung. Die Anordnung von Fenstern, Mantel, Dichtmittel und Koppelleitung ist so beschaffen, dass der optische Übergang über die Fenster zusätzlich eine doppelte Druckbarriere darstellt, die den Austritt von Stoffen aus dem Prozess in die Außenwelt verhindert.

Bricht das erste, in Kontakt mit dem Prozessraum stehende Fenster oder versagt dessen Dichtung, so können Stoffe aus dem Prozessraum in den Hohlraum, der durch die Fenster und den Mantel gebildet wird, eintreten. Durch die weitere Dichtung des zweiten Fensters wird wirksam verhindert, dass Stoffe aus dem Prozessraum über den Hohlraum in die Außenwelt gelangen. In einer bevorzugten Ausführungsform sind die Dichtmittel des ersten Fensters auswechselbar (z.B. O-Ring-Dichtungen), während das zweite Fenster bevorzugt unlösbar mit dem Mantel verbunden ist (z.B. über eine Lötverbindung). Ebenso ist es denkbar, für beide Fenster auswechselbare Dichtungen zu verwenden.

Bevorzugt verfügt die erfindungsgemäße Sonde über Mittel, die eine Überwachung des Hohlraums erlauben. In einer bevorzugten Ausrührungsform sind Anschlüsse am Mantel vorhanden, die es erlauben, den Hohlraum zu spülen. Tritt ein Leck auf, so tritt ein Stoff in den Hohlraum ein, der mittels des Spülgases ausgetragen und detektiert werden kann. In einer weiteren bevorzugten Ausführungsform ist ein Drucksensor vorhanden, der den Druck im Hohlraum überwacht. Weitere Möglichkeiten der Überwachung des Hohlraums sind denkbar.

Die erfindungsgemäße Sonde eignet sich zur optischen Überwachung von insbesondere unter Druck stehenden Prozessen. Unter Überwachung wird die zeitliche Verfolgung eines oder mehrerer Prozessparameter verstanden, die Auskunft über den Prozess geben können. Die Überwachung beinhaltet die Erfassung eines oder mehrerer Parameter und die Auswertung der gemessenen Parameterwerte. Die Auswertung kann beispielsweise in einem Vergleich eines gemessenen Parameterwerts mit einem Sollwert bestehen.

Die bevorzugt prozessintegrierte Prüfung der Qualitätsmerkmale und Prozessparameter dient der Überwachung des bestimmungsgemäßen Betriebs, der Früherkennung irregulärer Zustände und Abläufe und der damit verbundenen Begrenzung der Auswirkung von Störungen.

Prozessüberwachung kann somit als Wamsystem eingesetzt werden, um kostspielige Prozessunterbrechungen und Anlagenstillstände zu vermeiden. Der mit prozessintegrierter Überwachung mögliche Soll-Ist-Vergleich in Echtzeit kann auch dazu genutzt werden, um Prozesse durch Änderungen von Stellgrößen gezielt zu beeinflussen (Prozessregelung).

Unter optischer Überwachung wird verstanden, dass die Wechselwirkung eines im Prozess vorhandenen Stoffes mit elektromagnetischer Strahlung zur Erfassung eines Prozessparameters ausgenutzt wird. So kann beispielsweise die Konzentration eines Stoffes in einem Prozess durch Messung der Absorption eingestrahlter elektromagnetischer Strahlung verfolgt werden (siehe z.B. EP 1512960B1).

Die erfindungsgemäße Sonde ist insbesondere zur Überwachung von Prozessen geeignet, bei denen ein oder mehrere Gefahrstoffe auftreten. Unter einem Gefahrstoff wird ein Stoff verstanden, der für Mensch, Tier und/oder Umwelt schädlich sein kann. Gefahrstoffe können beispielsweise toxisch, ätzend und/oder krebserregend sein. Ein Beispiel eines Gefahrstoffs ist Phosgen.

Der Gefahrstoff kann in dem zu überwachenden Prozess beispielsweise als Edukt eingesetzt werden, als Zwischenprodukt auftreten oder als Endprodukt anfallen. Die erfindungsgemäße Sonde erlaubt die Überwachung des Prozesses, in dem der Gefahrstoff auftritt, so dass sichergestellt wird, dass der Prozess bestimmungsgemäß abläuft. Durch die doppelte Abdichtung des prozessseitigen Fensters gegenüber der Außenwelt wird gewährleistet, dass der Gefahrstoff bei einem Bruch des prozessseitigen Fensters oder einem Versagen einer Dichtung am prozessseitigen Fenster nicht in die Außenwelt gelangt. Der Gefahrstoff kann bei Bruch des prozessseitigen Fensters in einen Hohlraum gelangen, der ständig überwacht werden kann, um eine Undichtigkeit unmittelbar anzuzeigen.

Gegenstand der vorliegenden Erfindung ist daher auch die Verwendung der erfindungsgemäßen Sonde zur Überwachung eines insbesondere unter Druck stehenden Prozesses, bei dem ein oder mehrere Gefahrstoffe auftreten. In einer bevorzugten Ausführungsform wird die erfindungsgemäße Sonde zur Überwachung eines Prozesses eingesetzt, in dem Phosgen auftritt.

Gegenstand der vorliegenden Erfindung ist ferner ein Verfahren zur Überwachung eines Prozesses, in dem ein oder mehrere Gefahrstoffe auftreten, **dadurch gekennzeichnet, dass** elektromagnetische Strahlung durch ein druckdichtes Fenster in eine Koppelleitung eingekoppelt wird und mittels der Koppelleitung durch ein prozessseitiges weiteres druckdichtes Fenster in den Prozessraum eingekoppelt wird.

Die druckdichten Fenster schließen einen Hohlraum ein, der gegenüber dem Prozessraum und der Außenwelt druckdicht abgedichtet ist. Mindestens eine Koppelleitung zwischen den Fenstern verbindet diese optisch miteinander, sodass elektromagnetische Strahlung durch ein Fenster über die Koppelleitung zum anderen Fenster und durch dieses andere Fenster hindurch gelangen kann.

In einer bevorzugten Ausführungsform des erfindungsgemäßen Verfahrens wird der Hohlraum in Hinblick auf einen Übertritt von Stoffen aus dem Prozessraum in den Hohlraum überwacht. Dies geschieht beispielsweise über Druckmessung, spektroskopisch, massenspektrometrisch oder gaschromatografisch.

In einer bevorzugten Ausführungsform wird die elektromagnetische Strahlung, die auf die beschriebene Weise in den Prozessraum eingekoppelt worden ist, durch ein dem prozessseitigen Fenster gegenüberliegendes weiteres prozessseitiges Fenster wieder aus dem Prozessraum ausgekoppelt, in eine Koppelleitung eingekoppelt und durch ein druckdichtes Fenster zu einem Spektrometer geleitet, um sie in Hinblick auf veränderte Intensität mindestens einer Wellenlänge hin zu untersuchen.

Vorzugsweise wird die elektromagnetische Strahlung nach der Auskoppelung aus dem Prozessraum durch mindestens eines bei der Einkoppelung in den Prozessraum verwendetes Fenster zu einem Spektrometer geleitet.

Als elektromagnetische Strahlung wird vorzugsweise IR- (400 - 4000 cm⁻¹) NIR- (4000 - 14000 cm⁻¹) und/oder UV/Vis- (200 - 700 nm) Strahlung verwendet.

In einer bevorzugten Ausführungsform des erfindungsgemäßen Verfahrens wird ein Prozess, in dem Phosgen als Gefahrstoff auftritt, überwacht.

Im Folgenden wird die Erfindung anhand konkreter Ausführungsbeispiele näher erläutert, ohne sie jedoch hierauf zu beschränken.

### Es zeigen:

Fig. 1 Schematische Darstellung einer Anordnung von zwei Prozessfenstern in einem Rohr zur Überwachung des Prozesses
Fig. 2 Schematische Darstellung einer erfindungsgemäßen Sonde in Form einer Tauchsonde

### Bezugszeichen:

- 2: Mantel
- 10: Fenster zum Prozessraum
- 15: Fenster
- 17: Fensterfassung
- 20: Hohlraum
- 30: Dichtmittel
- 40: Lichtleiter
- 50: Linse
- 55: Spiegel
- 60: Fensterfassung
- 61: Anschluss
- 62: Anschluss
- 80: Rohrleitung
- 85: Verschraubung

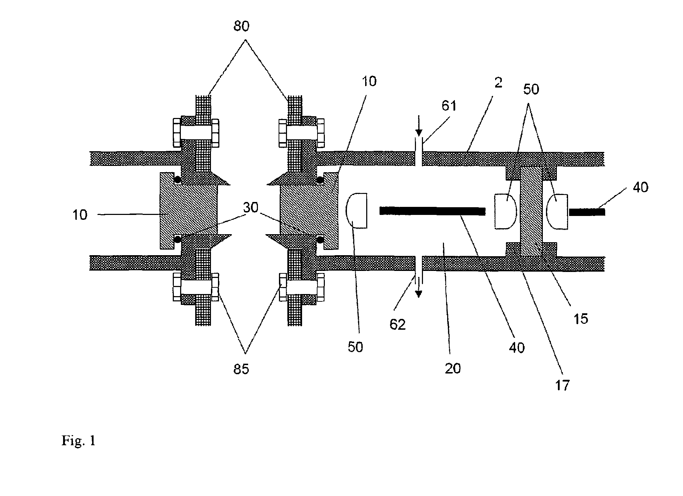

In einer bevorzugten Ausführungsform ist die erfindungsgemäße Sonde als Prozessfenster ausgeführt. Zur Überwachung eines Prozesses in einem Reaktor oder Rohr werden zwei der Prozessfenster an gegenüberliegenden Stellen des Reaktors oder Rohres so angeordnet, dass sich zwischen den Fenstern ein Spalt definierter Breite ergibt. Über ein Prozessfenster kann elektromagnetische Strahlung in den Prozessraum eingekoppelt werden. Bei einer spektroskopischen Analyse erfolgt Absorption elektromagnetischer Strahlung innerhalb der Schicht zwischen den gegenüberliegenden Prozessfenstern. Die transmittierte Strahlung wird durch das zweite Prozessfenster aus dem Prozessraum ausgekoppelt. Figur 1 zeigt eine solche Anordnung von zwei Prozessfenstern in einer schematischen Darstellung im Querschnitt. Diese sind an eine Rohrleitung (80) mittels Verschraubungen (85) angeflanscht. Das rechte Prozessfenster zeigt alle wesentlichen Bestandteile einer erfmdungsgemäßen Sonde. Ein Mantel (2) dient zur Aufnahme eines ersten Fensters (10), das in Kontakt mit dem Prozessraum steht. Ferner ist ein zweites Fenster (15) mit dem Mantel verbunden. Mantel und Fenster bilden einen Hohlraum (20). Dieser ist über Dichtmittel (30) vom Prozessraum abgedichtet.

Das zweite Fenster ist in einer Fensterfassung fest eingebracht, z.B. über eine Lötverbindung, während das erste Fenster lösbar mit dem Mantel verbunden ist und ausgewechselt werden kann.

Im Mantel sind Anschlüsse (61, 62) angebracht, die eine Spülung des Hohlraumes erlauben (angedeutet durch die Pfeile). Ein Lichtleiter (40) als Koppelleitung schafft eine optische Verbindung zwischen dem ersten und dem zweiten Fenster. Bevorzugt ist auf der dem Hohlraum (20) gegenüberliegenden Seite des zweiten Fensters (15) ebenfalls ein Lichtleiter vorhanden, der zur Quelle für elektromagnetische Strahlung oder zum Detektor führt.

Dem Fachmann ist bekannt, dass die Übertragung von elektromagnetischer Strahlung von einem Lichtleiter über ein Fenster zu einem anderen Lichtleiter nicht ohne Weiteres möglich ist, da die Lichtleiter nur über einen geringen Querschnitt verfügen und eine direkte Koppelung der Lichtleiter eine sehr genaue Positionierung derselben über das Fenster hinweg erfordert. Des Weiteren tritt elektromagnetische Strahlung aus einem Lichtleiter in Form divergenter Strahlung aus, so dass nur ein geringer Teil der aus einem Lichtleiter austretenden Strahlung überhaupt in den anderen Lichtleiter auf der gegenüberliegenden Seite des Fensters gelangen würde.

Die erfindungsgemäße Sonde weist daher Linsen (50) auf, die einen aufgeweiteten, kollimierten Strahl durch das Fenster leiten und ihn wieder in einen Lichtleiter einkoppeln. Die Verwendung solcher Kollimationslinsen erlaubt daher nicht nur die Ein- und Auskoppelung elektromagnetischer Strahlung in einen und aus einem Prozessraum, sondern auch die Übertragung von Signalen über ein druckdichtes Fenster.

In einer weiteren bevorzugten Ausführungsform liegt die erfindungsgemäße Sonde als Tauchsonde vor. Ein Beispiel einer solchen Tauchsonde ist schematisch in Figur 2 dargestellt. Gleiche Bezugszeichen in den Figuren 1 und 2 haben jeweils die gleiche Bedeutung. Es sind zwei Fenster (10) vorhanden, die in Kontakt mit einem Prozessraum gebracht werden können. Zwischen den Fenstern (10) liegt eine definierter Spalt mit einer definierten Breite vor, so dass spektroskopische Untersuchungen an einer definierten Schichtdicke möglich sind.

Elektromagnetische Strahlung wird über einen ersten Lichtleiter (40) in die erfindungsgemäße Sonde eingekoppelt und über einen weiteren Lichtleiter aus der Sonde ausgekoppelt (gekennzeichnet durch die Pfeile).

Es ist ein Hohlraum (20) vorhanden, der über Dichtmittel (30) zum Prozessraum hin abgedichtet werden kann. Ferner ist ein zweites Fenster (15) mit dem Mantel verbunden, welches den Hohlraum zur Außenwelt abdichtet. Dieses zweite Fenster ist in einer Fensterfassung (60) fest eingebracht, z.B. über eine Lötverbindung. Die Übertragung von elektromagnetischer Strahlung über ein Fenster erfolgt mit Hilfe von Linsen (50). Spiegel (55) sorgen für eine Umlenkung elektromagnetischer Strahlung.

## Patentansprüche

**1.** Sonde zur Überwachung eines unter Druck stehenden Prozesses mindestens umfassend
■ einen Mantel, mit einem ersten Fenster, das mit dem Prozessraum in Kontakt gebracht werden kann, und einem zweiten Fenster, das zusammen mit dem ersten Fenster und dem Mantel einen Hohlraum einschließt,
■ Dichtmittel, die den Hohlraum zum Prozess und zur Außenwelt abdichten,
■ mindestens eine Koppelleitung, die zwischen dem ersten und dem zweiten Fenster so angeordnet ist, dass elektromagnetische Strahlung, die durch eines der beiden Fenster eintritt, über die Koppelleitung durch das jeweils andere Fenster geleitet werden kann.

**2.** Sonde nach Anspruch 1, **dadurch gekennzeichnet, dass** das erste Fenster auswechselbar ist.

**3.** Sonde nach einem der Ansprüche 1 oder 2, **dadurch gekennzeichnet, dass** das zweite Fenster fest und druckdicht in den Mantel integriert ist.

**4.** Sonde nach einem der Ansprüche 1 bis 3, weiterhin umfassend Anschlüsse zur Spülung des Hohlraums.

**5.** Sonde nach einem der Ansprüche 1 bis 3, weiterhin umfassend entweder einen Drucksensor zur Überwachung des Drucks im Hohlraum oder eine Spülgasversorgung und einen Sensor zur Erfassung eines in den Hohlraum eindringenden Stoffs.

**4.** Sonde nach einem der Ansprüche 1 bis 3, **dadurch gekennzeichnet, dass** die Koppelleitung als Hohlleiter ausgebildet ist.

**5.** Sonde nach einem der Ansprüche 1 bis 3, **dadurch gekennzeichnet, dass** die Koppelleitung als Lichtleiter ausgebildet ist.

**6.** Sonde nach Anspruch 5, weiterhin umfassend Linsen zur Übertragung elektromagnetischer Strahlung über mindestens ein Fenster.

**7.** Sonde nach Anspruch 5 oder 6, **dadurch gekennzeichnet, dass** sie als Prozessfenster ausgebildet ist.

**8.** Sonde nach Anspruch 5 oder 6, **dadurch gekennzeichnet, dass** sie als Tauchsonde ausgebildet ist.

**9.** Verwendung einer Sonde gemäß einem der Ansprüche 1 bis 8 zur Überwachung eines insbesondere unter Druck stehenden Prozesses, in dem ein oder mehrere Gefahrstoffe auftreten.

**10.** Verwendung nach Anspruch 9, **dadurch gekennzeichnet, dass** als ein Gefahrstoff Phosgen auftritt.

**11.** Verfahren zur Überwachung eines Prozesses, in dem ein oder mehrere Gefahrstoffe auftreten, **dadurch gekennzeichnet, dass** elektromagnetische Strahlung durch ein druckdichtes Fenster in eine Koppelleitung eingekoppelt wird und mittels der Koppelleitung durch ein prozessseitiges weiteres druckdichtes Fenster in den Prozessraum eingekoppelt wird.

**12.** Verfahren nach Anspruch 11, **dadurch gekennzeichnet, dass** die elektromagnetische Strahlung durch ein dem prozessseitigen Fenster gegenüberliegendes weiteres prozessseitiges Fenster wieder aus dem Prozessraum ausgekoppelt, in eine Koppelleitung eingekoppelt und durch ein druckdichtes Fenster zu einem Spektrometer geleitet wird, um sie in Hinblick auf veränderte Intensität mindestens einer Wellenlänge hin zu untersuchen.

**13.** Verfahren nach Anspruch 12, **dadurch gekennzeichnet, dass** die elektromagnetische Strahlung nach der Auskoppelung aus dem Prozessraum durch mindestens eines bei der Einkoppelung in den Prozessraum verwendetes Fenster zu einem Spektrometer geleitet wird.

**14.** Verfahren nach einem der Ansprüche 11 bis 13, **dadurch gekennzeichnet, dass** der von den druckdichten Fenstern eingeschlossene Hohlraum in Hinblick auf den Übertritt von Stoffen aus dem Prozessraum in den Hohlraum überwacht wird.

**15.** Verfahren nach einem der Ansprüche 11 bis 14, **dadurch gekennzeichnet, dass** als ein Gefahrstoff Phosgen auftritt.
